# EUROPÄISCHE PATENTSCHRIFT

(11) **EP 2 331 847 B1**
(45) Veröffentlichungstag und Bekanntmachung des Hinweises auf die Patenterteilung: **07.05.2014**
(21) Anmeldenummer: 09783337.0
(22) Anmeldetag: 23.09.2009
(51) Int. Cl.: F16H 57/04, F02N 15/04

(54) **STARTERGETRIEBE MIT GLEITLACKBESCHICHTUNG**
STARTER GEAR WITH ANTIFRICTION LACQUER COATING
TRANSMISSION DE DÉMARREUR AVEC REVÊTEMENT DE VERNIS LISSE

(30) Priorität: 29.09.2008 DE 102008042444
(43) Veröffentlichungstag der Anmeldung: 15.06.2011
(73) Patentinhaber: Robert Bosch GmbH, 70442 Stuttgart (DE)
(72) Erfinder: FROEHLICH-SCHLAPP, Michael, 71634 Ludwigsburg (DE)
(86) Internationale Anmeldenummer: PCT/EP2009/062332
(87) Internationale Veröffentlichungsnummer: WO 2010/034746

(56) Entgegenhaltungen:
- DE-A1- 19 530 377
- DE-A1-102004 051 289
- DE-A1-102005 060 395
- JP-A- 5 171 168
- JP-A- 2002 130 097
- SU-A1- 838 209
- US-B1- 6 782 773

## Beschreibung

Die Erfindung betrifft ein Getriebe zur Reduzierung der Drehzahl bei gleichzeitiger Erhöhung des Drehmoments eines Startermotors gemäß dem Oberbegriff des Anspruchs 1.

Weiter betrifft die Erfindung einen Starter zum Andrehen einer Brennkraftmaschine nach dem Oberbegriff des Anspruchs 6.

Zudem betrifft die Erfindung ein System umfassend eine Brennkraftmaschine und einen Starter zum Andrehen einer Brennkraftmaschine nach dem Oberbegriff des Anspruchs 7.

### Stand der Technik .

Die Erfindung geht aus von einem Getriebe zur Reduzierung der Drehzahl bei gleichzeitiger Erhöhung des Drehmoments eines Startermotors nach Gattung des unabhängigen Anspruchs.

Aus dem Stand der Technik sind Anlasser für Fahrzeuge mit Verbrennungsmotoren bekannt, die in der Regel einen Gleichstromelektromotor zum Antreiben des Verbrennungsmotors umfassen. Bei einem Großteil der Anlasser wird zur Verringerung der Drehzahl bei gleichzeitiger Erhöhung des Drehmoments an einem in den Zahnkranz einspurenden Ritzel ein Untersetzungsgetriebe zwischen Ritzel und Elektromotor eingebaut. Für diese Getriebe werden typischerweise Planetengetriebe eingesetzt. Diese Zwischenlager genannten Getriebe bestehen aus einem Hohlrad, einem Sonnenrad und mehreren, zum Beispiel drei bis sechs, Planentenrädern. Teilweise ist das Hohlrad aus einem Sintermetall hergestellt, das von einem Gehäuse aus Kunststoff gehalten wird. Bei anderen Startern werden das Hohlrad und das Gehäuse in einem Teil aus einem Kunststoff hergestellt. Zur Verringerung von Verschleiß und Reibung werden beide Arten dieses Zwischenlagers mit Fett geschmiert. Ausführungen für Anlasser sind beispielsweise aus GB 151454, US 1,594,825, JP 2002-257016, JP 2002-130097 und DE 102 90 004 T5 bekannt.

Aus der DE 10 2005 060395 A1 ist ein Anlasser für einen Kraftfahrzeugmotor bekannt, der mit einem Planetenradgetriebe als Drehzahlreduziergetriebe und einem Drehmomentstoßabsorber ausgestattet ist. Der Drehmomentstoßabsorber besteht aus einer äußeren zylindrischen Ummantelung und einem Hohlrad des Planetenradgetriebes. Die äußere zylindrische Ummantelung ist mit einer Mehrzahl von angeformten Verriegelungsvorsprüngen versehen, die in ein Anlassergehäuse eingepaßt sind, um die äußere zylindrische Ummantelung an einer Drehung zu hindern. Die Vorsprünge erstrecken sich in Achsrichtung des Anlassers, wodurch sie eine Verringerung der Größe des Anlassers ermöglichen. Bei dem bekannten Anlasser ist eine fest Schmierschicht vorgesehen. Die Schmierschicht ist mittels Karburieren und ggf. Schleifen gebildet, wobei zusätzlich ein Bondern oder ein anderer chemischer Umwandlungsschritt erforderlich ist. Zusätzlich ist ein Aufbringen von Molybdän oder Molybdänverbindungen erforderlich.

Aus der JP 05 171168 A sind Schmierschichten zur Reibungsreduzierung bekannt. Die Schmierschichten umfassen Beschichtungen, die mittels Bondern erhalten werden und Mangan-Phosphat-Beschichtungen. Die Schmierschichten auf unterschiedlichen Bauteilen unterscheiden sich dabei hinsichtlich eines Kunstharzanteils.

Aus der SU 838 209 A1 ist eine Beschichtung von miteinander kämmenden Zahnrädern bekannt.

Aus der DE 195 30 377 A1 ist ein elektrischer Reversierantrieb für Regelventile bekannt, mit Gehäuse, Getriebemotor, Im Gehäuse drehbar gelagerter Buchse mit Innengewinde und auf und nieder bewegbarer Stellspindel mit einem Außengewindeabschnitt. Die Buchse ist von dem Getriebemotor rotierend antreibbar. Das Außengewinde der Stellspindel greift in das Innengewinde der Buchse ein. Buchse und Stellspindel bestehen aus metallischen Werkstoffen. Erfindungsgemäß weist entweder das Außengewinde der Stellspindel oder das Innengewinde der Buchse eine reibwertreduzierende Gleitbeschichtung in Form eines mit der Metalloberfläche des Trägermaterials fest verbundenen Hartfilms auf.

Aus der US 6,782,773 B1 ist ein Starterring mit einer selbst-schmierenden Beschichtung bekannt. Eine dünne Beschichtung ist beispielsweise aus einem Elastomer oder einem Plastomer gebildet. Eine selbst-schmierende Beschichtung ist zumindest auf zwei axialen Seiten eines Zahns angebracht, kann aber auch die Oberfläche zwischen zwei Zähnen bedecken.

Aus der DE 10 2004 051 289 A1 ist ein Getriebe bekannt, das mittels eines Feststoffpulver-Schmierstoffs geschmiert werden soll.

### Offenbarung der Erfindung

Das erfindungsgemäße Getriebe, der erfindungsgemäße Starter und das erfindungsgemäße System mit den Merkmalen des entsprechenden Hauptanspruches oder nebengeordneten Anspruches haben dem gegenüber den Vorteil, dass als reibungsreduzierende Mittel nichtflüchtige reibungsreduzierende Mittel eingesetzt werden. Die im Stand der Technik eingesetzten flüchtigen reibungsreduzierenden Mittel wie Fette haben den Nachteil, dass diese im Betrieb verbraucht werden oder durch den Eintrag von Staub oder Schmutz verpasten können. Dadurch kann es zu störenden Geräuschen, erhöhtem Verschleiß oder Ausfall des Starters kommen. Durch den Einsatz von nichtflüchtigen reibungsreduzierenden Mitteln entfällt dieser Ausfallmechanismus.

Durch die in den abhängigen Ansprüchen aufgeführten Maßnahmen sind vorteilhafte Weiterbildungen und Verbesserungen der in den unabhängigen und nebengeordneten Ansprüchen vorgegebenen Vorrichtungen möglich.

Besonders vorteilhaft ist es, dass die nichtflüchtigen reibungsreduzierenden Mittel als Beschichtung an dem Antriebsteil und/oder Abtriebsteil ausgebildet sind. Hierdurch lassen sich die Mittel dauerhaft mittels einfacher Beschichtungsverfahren aufbringen. Zudem lässt sich die Beschichtung platzsparend ausführen, sodass eine Baugröße nicht oder nur unwesentlich beeinflusst wird.

In einer vorteilhaften Ausgestaltung ist vorgesehen, dass die Beschichtung als Gleitlackbeschichtung ausgebildet ist. Der Gleitlack besteht aus festen Schmierstoffen wie Teflon, MoS₂, WS₂ oder Grafit, die auch bei hohen Temperaturen, wie sie im Betrieb vorkommen, noch in fester Form vorliegen und einem Lack als Binde- und Trägerphase. Insbesondere weist der Gleiflack keine pastösen Komponenten auf, sodass Staub nicht gebunden wird, wodurch ein Ausfall des Getriebes durch ein eventuelles Blockieren vermieden wird. Aufgrund einer hohen Alterungsbeständigkeit kann ein Ausfall ausgeschlossen werden.

Die erfindungsgemäßen Gleitlacke zeichnen sich durch einen breiten thermischen Einsatzbereich von etwa -50°C bis größer etwa 400 °C aus. Durch die nahezu konstante Viskosität auch bei Temperaturen unter 0°C lassen sich die Reibungseigenschaften optimal ausnutzen und insbesondere das Entstehen von Geräuschen reduzieren. Zur Reduzierung des CO₂-Ausstoß von Kraftfahrzeugen werden in zunehmendem Maße Systeme eingesetzt, bei denen der Verbrennungsmotor beim Stillstand des Fahrzeugs (z.B. an einer roten Ampel) selbstständig abgeschaltet wird (sogenannte Start-Stopp-Systeme). Gerade im Hinblick auf Start-Stopp-Systeme, bei denen das Fahrzeug für den Fahrer nahezu unbemerkt wieder anspringen soll, ist eine geringe Geräuschentwickiung von großer Bedeutung. Auch bei hohen Temperaturen ergibt sich ein Vorteil von Gleitlacken zum Beispiel gegenüber Schmierfetten. Die Viskosität von Gleitlacken sinkt bei steigenden Temperaturen kaum. Bei Start-Stopp-Fahrzeugen findet ein sehr großer Anteil von Starts bei heißem Motor statt. Der Gleitlack verbleibt auch bei derartigen Temperaturen an dem aufgebrachten Ort, sodass hier keine Mangelschmierung entstehen kann. Zudem sind Gleitlacke den steigenden Leistungsanforderungen bei Anlassern gewachsen, indem sie weniger altern bei entsprechend höheren Leistungen. Dadurch, dass bei Gleitlacken keine Verpastung auftritt, wie beispielsweise bei Schmierfetten, werden keine Schmutzpartikel gebunden, sodass eine längere Lebensdauer auch bei Anlassern mit geringerem Bauraum und steigender Anzahl an Kohlebürsten und damit verbundenen steigenden Mengen an Kohlenstaub gewährleistet ist.

Zudem liegt ein Vorteil darin, dass das Getriebe als ein Kunststoffgetriebe mit einem Antriebsteil und/oder einem Abtriebsteil aus Kunststoff ausgebildet ist, insbesondere aus einem Kunststoff mit hoher Polarität und /oder hoher Oberflächenenergie. Der Aufwand zum Aufbringen einer Gleitlackbeschichtung ist umso geringer, je polarer der kunststoff aufgebaut ist, das heißt, je höher dessen Oberflächenenergie ist. Ein geeignetes Material ist beispielsweise ein leicht kristallierendes Polyamid, wie PA-66, welcher unter anderem gute Haftungsbedingungen für eine Gleitlackbeschichtung aufweist.

Ein weiterer Vorteil liegt darin, dass das Getriebe als ein Planetenradgetriebe mit Planetenrädern, Sonnenrad und Hohlrad ausgebildet ist. Die Vorteile von Planetenradgetrieben gegenüber anderen Getrieben liegen in ihrer kompakten Größe bei vergleichbarer Übersetzung.

Noch ein weiterer Vorteil der vorliegenden Erfindung liegt darin, dass das Hohlrad die Gleitlackbeschichtung aufweist. Auf diese Weise muss nicht das gesamte Getriebe beschichtet werden. Insbesondere liegt ein Vorteil der vorliegenden Erfindung darin, dass das Hohlrad eine sich über eine gesamte Innenfläche erstreckende Verzahnung aufweist, wobei die gesamte Innenfläche mit der Gleitlackbeschichtung ausgebildet ist. Der Umfang der Beschichtung lässt sich vorteilhafterweise dadurch reduzieren, dass das Hohlrad eine sich über eine gesamte Innenfläche erstreckende Verzahnung aufweist, wobei nur die Verzahnung mit der Gleitlackbeschichtung ausgebildet ist.

Der erfindungsgemäße Starter zum Andrehen einer Brennkraftmaschine, mit einem in den Zahnkranz der Brennkraftmaschine einspurendem Ritzel mit einem dazwischengeschalteten Getriebe zur Verringerung der Drehzahl und Erhöhung des Drehmoments des Ritzels gegenüber dem Antriebsmotor, wobei das Getriebe ein Antriebsteil und ein mit den Antriebsteil in tribologischer Wirkverbindung stehendes Abtriebsteil umfasst, und reibungsreduzierende Mittel zwischen Antriebsteil und Antriebsteil für einen Betrieb vorgesehen sind, wobei die reibungsreduzierenden Mittel als nichtflüchtige reibungsreduzierende Mittel ausgebildet sind, hat gegenüber dem Stand der Technik den Vorteil, dass aufgrund der nichtflüchtige Eigenschaften der Mittel die Lebensdauer vergrößert ist und der Starter für kleinere Bauräume und größere Belastungen auslegbar ist. Die Brennkraftmaschine ist bevorzugt ein Verbrennungsmotor.

Das erfindungsgemäße System umfassend eine Brennkraftmaschine und einen Starter zum Andrehen einer Brennkraftmaschine, wobei der Starter einen Antriebsmotor und ein über Kopplungsmittel mit dem Antriebsmotor gekoppeltes Ritzel zum Übertragen eines Drehmomentes auf einen mit dem Ritzel in Eingriff bringbaren Zahnkranz der Brennkraftmaschine, sowie ein Untersetzungsgetriebe mit einem Antriebsteil und einem mit den Antriebsteil in tribologischer Wirkverbindung stehendem Abtriebsteil umfassen, wobei reibungsreduzierende Mittel zwischen Antriebsteil und Abtriebsteil für einen Betrieb vorgesehen sind und die reibungsreduzierenden Mittel als nichtflüchtige reibungsreduzierende Mittel ausgebildet sind, weist ebenfalls die Vorteile auf, dass aufgrund der nichtfluchtigen Eigenschaften der Mittel die Wartungsintervalle und die Lebensdauer vergrößert sind und der Starter für kleinere Bauräume und größere Belastungen auslegbar ist.

### Kurze Beschreibung der Zeichnungen

Ausführungsbeispiele der Erfindung sind in den Zeichnungen dargestellt und in der nachfolgenden Beschreibung näher erläutert. Es zeigen:
Figur 1 eine Startvorrichtung im Längsschnitt,
Figur 2 ein als Planetenrad-Zwischenlager ausgebildetes Getriebe,
Figur 3 eine andere Ausführungsform des Getriebes nach Fig. 2 und

### Beschreibung des Ausführungsbeispiels

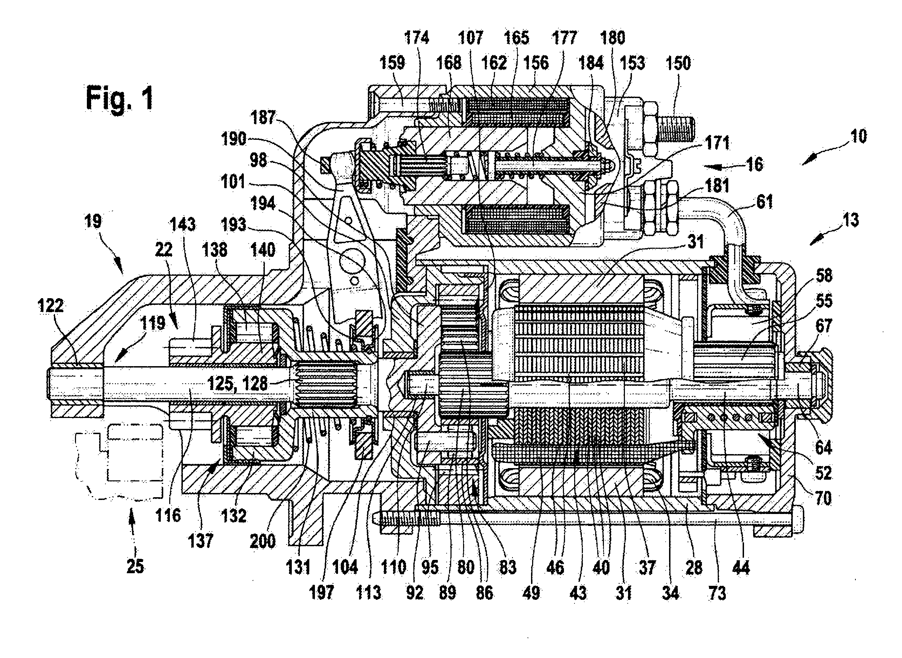

Figur 1 zeigt eine Startvorrichtung in einem Längsschnitt. In der Figur 1 ist eine Startvorrichtung - oder kurz ein Starter - 10 dargestellt. Diese Startvorrichtung 10 weist beispielsweise einen Antriebs- oder Startermotor 13 und ein Einrückrelais oder Einspurrelais 16 auf. Der Startermotor 13 und das Einrückrelais 16 sind an einem gemeinsamen Antriebslagerschild 19 befestigt. Der Startermotor 13 dient funktionell dazu, ein Ritzel - genauer das Andrehritzel - 22 anzutreiben, wenn es im Zahnkranz 25 der hier nicht dargestellten Brennkraftmaschine eingespurt ist.

Der Startermotor 13 weist als Gehäuse ein Polrohr 28 auf, das an seinem Innenumfang Polschuhe 31 trägt, die jeweils von einer Erregerwicklung 34 umwickelt sind. Die Polschuhe 31 umgeben wiederum einen Anker 37, der ein aus Lamellen 40 aufgebautes Ankerpaket 43 und eine in Nuten 46 angeordnete Ankerwicklung 49 aufweist. Das Ankerpaket 43 ist auf eine Antriebswelle 44 aufgepresst. An dem Andrehritzel 22 abgewandten Ende der Antriebswelle 44 ist des weiteren ein Kommutator 52 angebracht, der u.a. aus einzelnen Kommutatorlamellen 55 aufgebaut ist. Die Kommutatorlamellen 55 sind in bekannter Weise mit der Ankerwicklung 49 derartig elektrisch verbunden, dass sich bei Bestromung der Kommutatorlamellen 55 durch Kohlebürsten 58 eine Drehbewegung des Ankers 37 im Polrohr 28 ergibt. Eine zwischen dem Einspurrelais 16 und dem Startermotor 13 angeordnete Stromzuführung 61 versorgt im Einschaltzustand sowohl die Kohlebürsten 58 als auch die Erregerwicklung 34 mit Strom. Die Antriebswelle 44 ist kommutatorseitig mit einem Wellenzapfen 64 in einem Gleitlager 67 abgestützt, welches wiederum in einem Kommutatorlagerdeckel 70 ortsfest gehalten ist. Der Kommutatordeckel 70 wiederum wird mittels Zuganker 73, die über den Umfang des Polrohrs 28 verteilt angeordnet sind (Schrauben, beispielsweise 2, 3 oder 4 Stück) im Antriebslagerschild 19 befestigt. Es stützt sich dabei das Polrohr 28 am Antriebslagerschild 19 ab, und der Kommutatorlagerdeckel 70 am Polrohr 28.

In Antriebsrichtung schließt sich an den Anker 37 ein sogenanntes Sonnenrad 80 an, das Teil eines Planetengetriebes 83 ist. Das Sonnenrad 80 ist von mehreren Planetenrädern 86 umgeben, üblicherweise drei Planetenräder 86, die mittels Wälzlager 89 auf Achszapfen 92 abgestützt sind. Die Planetenräder 86 wälzen in einem Hohlrad 95 ab, das im Polrohr 28 außenseitig gelagert ist. In Richtung zur Abtriebsseite schließt sich an die Planetenräder 86 ein Planetenträger 98 an, in dem die Achszapfen 92 aufgenommen sind. Der Planetenträger 98 wird wiederum in einem Zwischenlager 101, welches als Planetengetriebe 83 ausgebildet sein kann, und einem darin angeordneten Gleitlager 104 gelagert. Das Zwischenlager 101 ist derartig topfförmig gestaltet, dass in diesem sowohl der Planetenträger 98, als auch die Planetenräder 86 aufgenommen sind. Desweiteren ist im topfförmigen Zwischenlager 101 das Hohlrad 95 angeordnet, das letztlich durch einen Deckel 107 gegenüber dem Anker 37 geschlossen ist. Auch das Zwischenlager 101 stützt sich mit seinem Außenumfang an der Innenseite des Polrohrs 28 ab. Der Anker 37 weist auf dem vom Kommutator 52 abgewandten Ende der Antriebswelle 44 einen weiteren Wellenzapfen 110 auf, der ebenfalls in einem Gleitlager 113 aufgenommen ist, ab. Das Gleitlager 113 wiederum ist in einer zentralen Bohrung des Planetenträgers 98 aufgenommen. Der Planetenträger 98 ist einstückig mit der Abtriebswelle 116 verbunden. Diese Abtriebswelle 116 ist mit ihrem vom Zwischenlager 101 abgewandten Ende 119 in einem weiteren Lager 122, welches im Antriebslagerschild 19 befestigt ist, abgestützt. Die Abtriebswelle 116 ist in verschiedene Abschnitte aufgeteilt: So folgt dem Abschnitt, der im Gleitlager 104 des Zwischenlagers 101 angeordnet ist, ein Abschnitt mit einer sogenannten Geradverzahnung 125 (Innenverzahnung), die Teil einer sogenannten Wellen-Nabe-Verbindung ist. Diese Welle-Nabe-Verbindung 128 ermöglicht in diesem Fall das axial geradlinige Gleiten eines Mitnehmers 131. Dieser Mitnehmer 131 ist ein hülsenartiger Fortsatz, der einstückig mit einem topfförmigen Außenring 132 des Freilaufs 137 ist. Dieser Freilauf 137 (Richtgesperre) besteht des Weiteren aus dem Innenring 140, der radial innerhalb des Außenrings 132 angeordnet ist. Zwischen dem Innenring 140 und dem Außenring 132 sind Klemmkörper 138 angeordnet Diese Klemmkörper 138 verhindern in Zusammenwirkung mit dem Innen- und dem Außenring 140 und 132 eine Relativdrehung zwischen dem Außenring 132 und dem Innenring 140 in einer zweiten Richtung. Mit anderen Worten: Der Freilauf 137 ermöglicht eine Relativbewegung zwischen Innenring 140 und Außenring 132 nur in eine Richtung. In diesem Ausführungsbeispiel ist der Innenring 140 einstückig mit dem Andrehritzel 22 und dessen Schrägverzahnung 143 (Außenschrägverzahnung) ausgeführt.

Der Vollständigkeit halber sei hier noch auf den Einspurmechanismus eingegangen. Das Eindrückrelais 16 weist einen Bolzen 150 auf, der ein elektrischer Kontakt ist und der an den Pluspol einer elektrischen Starterbatterie, die hier nicht dargestellt ist, angeschlossen ist. Dieser Bolzen 150 ist durch einen Relaisdeckel 153 hindurchgeführt. Dieser Relaisdeckel 153 schließt ein Relaisgehäuse 156 ab, das mittels mehrerer Befestigungselemente 159 (Schrauben) am Antriebslagerschild 19 befestigt ist. Im Einrückrelais 16 ist weiterhin eine Einzugswicklung 162 und eine sogenannte Haltewicklung 165 angeordnet. Die Einzugswicklung 162 und die Haltewicklung 165 bewirken beide jeweils im eingeschalteten Zustand ein elektromagnetisches Feld, welches sowohl das Relaisgehäuse 156 (aus elektromagnetisch leitfähigem Material), einen linear beweglichen Anker 168 und einen Ankerrückschluss 171 durchströmt. Der Anker 168 trägt eine Schubstange 174, die beim linearen Einzug des Ankers 168 in Richtung zu einem Schaltbolzen 177 bewegt wird. Mit dieser Bewegung der Schubstange 174 zum Schaltbolzen 177 wird dieser aus seiner Ruhelage in Richtung zu zwei Kontakten 180 und 181 bewegt, sodass eine am zu den Kontakten 180 und 181 gelegenem Ende des Schaltbolzens 177 angebrachte Kontaktbrücke 184 beide Kontakte 180 und 181 elektrisch miteinander verbindet Dadurch wird vom Bolzen 150 eine elektrische Leistung über die Kontaktbrücke 184 hinweg zur Stromzuführung 61 und damit zu den Kohlebürsten 58 geführt. Der Startermotor 13 wird dabei bestromt.

Das Einrückrelais 16 bzw. der Anker 168 hat aber darüber hinaus auch die Aufgabe, mit einem Zugelement 187 einen dem Antriebslagerschild 19 drehbeweglich angeordneten Hebel 190 zu bewegen. Dieser Hebel 190, üblicherweise als Gabelhebel ausgeführt, umgreift mit zwei hier nicht dargestellten "Zinken" an seinem Außenumfang zwei Scheiben 193 und 194, um einen zwischen diesen eingeklemmten Mitnehmerring 197 zum Freilauf 137 hin gegen den Widerstand der Feder 200 zu bewegen und dadurch das Andrehritzel 22 in dem Zahnkranz 25 einzuspuren.

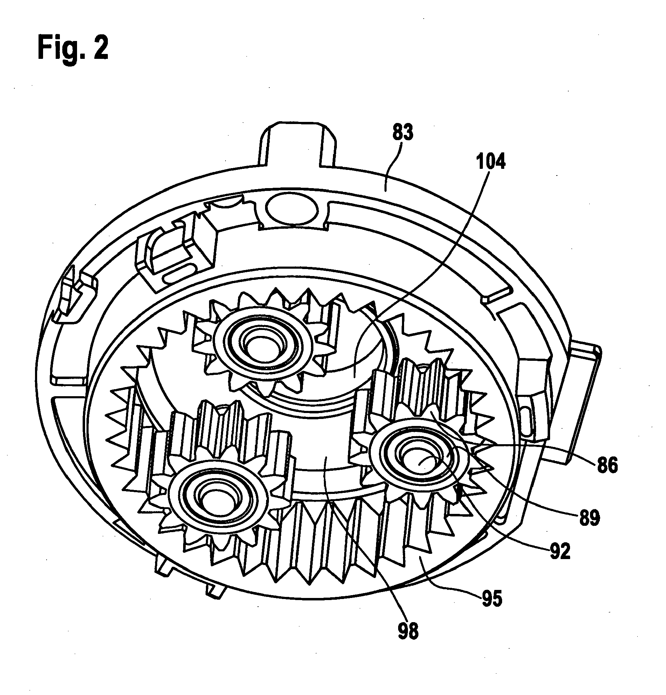

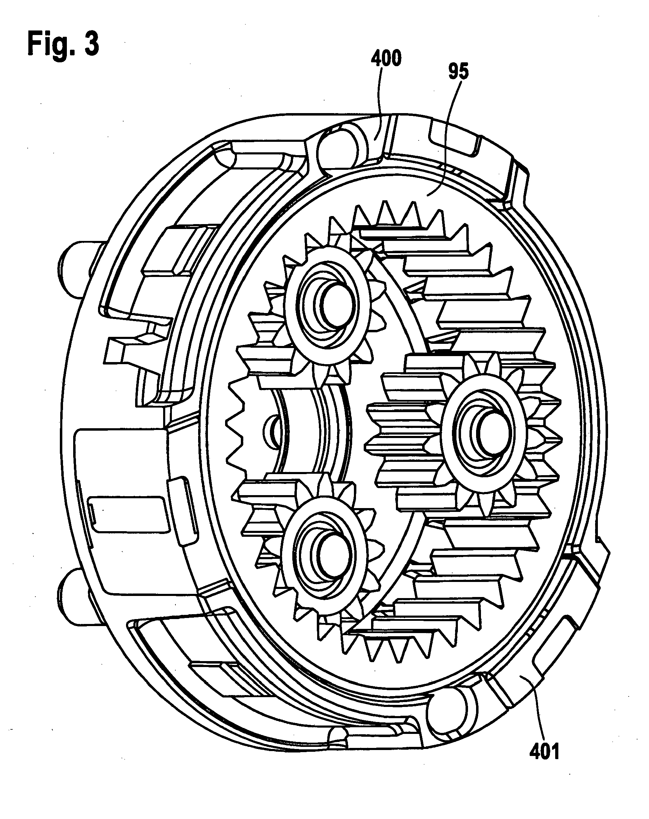

Figur 2 zeigt das als Planetenrad-Zwischenlager ausgebildete Getriebe 83, welches auch Zwischenlager genannt wird. Das Planetengetriebe 83 umfasst, wie schon zuvor beschrieben, das Sonnenrad 80 (hier nicht dargestellt), drei Planetenräder 86 und ein Hohlrad 95. In Fig. 2 ist das Planetengetriebe 83 als ungedämpftes Zwischenlager ausgebildet, wobei das Hohlrad 95 und ein zugehöriges Gehäuse (hier nicht dargestellt, siehe Fig. 3, Bezugszeichen 400) einteilig ausgebildet sind. In Fig. 2 (und Fig. 3) sind das Hohlrad 95 und das Gehäuse aus einem Kunststoff, genauer aus PA-66, ausgebildet

Figur 3 zeigt eine andere Ausführungsform des Getriebes 83 nach Fig. 2. In Fig. 3 ist das Getriebe 83 als gedämpftes Zwischenlager ausgebildet. Das Getriebe 83 gemäß Figur 3 entspricht im Wesentlichen dem Getriebe 83 gemäß Figur 2 und für gleiche Bauteile werden einheitliche Bezugszeichen verwendet. Im Unterschied zu der Ausführungsform gemäß Figur 2 sind das Hohlrad 95 und das Gehäuse 400 als getrennte Teile ausgebildet, wobei das Hohlrad 95 vorzugsweise aus einem Sintermetall hergestellt ist und das Gehäuse 400 aus einem Kunststoff wie PA-66. Zur Dämpfung von Stößen und Vibrationen stützt sich das Hohlrad in Dämpfungsgummis 401 ab, die wiederum vom Hohlrad 95 gehalten werden.

Das in den Figuren dargestellte Zwischenlager 83 zeigt eine perspektivische Ansicht eines Zwischenlagers 83 mit Gleitlackbeschichtung. Das Zwischenlager 83 ist gemäß Fig. 2 ausgebildet, das heißt, das Hohlrad 95 und das Gehäuse 400 sind einteilig aus Kunststoff ausgebildet. Das Hohlrad 95, welches eine sich über die gesamte Innenfläche erstreckende, vollständig umlaufende Verzahnung aufweist, ist im Bereich der Verzahnung mit dem Gleitlack beschichtet.

Zur Verringerung der Reibung zwischen Planetenrädern 86, Sonnenrad 80 (hier nicht dargestellt) und Hohlrad 95 ist das Hohlrad 95 mit dem Gleitlack beschichtet. Es kann nur die Verzahnung oder die gesamte Innenfläche des Zwischenlagers (Hohlrad 95) beschichtet werden. Die Gleitlackbeschichtung von Kunststoffen ist umso einfacher, je polarer die Kunststoffe aufgebaut sind, das heißt, je höher die Oberflächenenergie ist. Geeignet für das Gleitlackbeschichten ist PA-66. PA-66 zeichnet sich durch eine hohe Polarität und Oberflächenenergie aus, sodass es hier zu einer optimalen Haftung des Gleitlacks auf dem Kunststoff kommt. Eine typische Schichtdicke des Gleitlacks liegt in einem Bereich von etwa 20-30 µm. Eingesetzt wird ein erfindungsgemäßes Getriebe bevorzugt bei Anlassern, die mehr als vier Kohlebürsten in deren Kommutator aufweisen. Weiterhin kann der Gleitlack in anderen Getriebearten eingesetzt werden, die sich durch unterschiedliche Merkmale unterscheiden. Beispielsweise kann zur Charakterisierung eines Anlassers neben der elektrischen Leistung das vom Ankerpaket ausgefüllte Volumen Va herangezogen werden. Dazu wird der Durchmesser des Pakets (der Ankerlamellen) mit der Länge aller Lamellen verrechnet, ohne dass Aussparungen o.ä. im Paket berücksichtigt werden. Eine weitere Kenngröße für die Charakterisierung ist das gesamte Volumen der im Starter verbauten Kohlebürsten, zum Beispiel vier oder sechs Bürsten, Vk. Das erfindungsgemäße Hohlrad 95 soll auch bei Anlassern eingesetzt werden, bei denen das Verhältnis von Ankervolumen zu Kohlevolumen (Va/Vk) etwa zwischen 11 und 15 liegt, im spezielien zwischen 13 und 14. Weiterhin soll das erfindungsgemäße Hohlrad 95 bei Startern mit einer elektrischen Leistung von 1.0 kW bis 4 kW eingesetzt werden, bei denen das Verhältnis von Ankervolumen zu Kohlevolumen (Va/Vk) wischen etwa 16 und 22 beträgt, im speziellen zwischen 18 und 21. Auch ist der Einsatz bei Startern vorgesehen, bei denen das Zwischenlager nicht durch konstruktive Maßnahmen so abgedichtet ist, dass keine Spalte > 5 µm vorhanden sind. Die Abdichtung kann z.B. durch Dichtlippen oder durch eine entsprechend enge Passung zwischen den Bauteilen erreicht werden. Weiter kann der Einsatz bei Startern, die bleifreie Bürsten zur Kommutierung verwenden, vorgesehen sein.

## Patentansprüche

1. Getriebe zur Reduzierung der Drehzahl bei gleichzeitiger Erhöhung des Drehmoments eines Startermotors (13) für Brennkraftmaschinen, umfassend ein Antriebsteil und ein mit dem Antriebsteil in tribologischer Wirkverbindung stehendes Abtriebsteil, wobei reibungsreduzierende Mittel zwischen Antriebsteil und Abtriebsteil für einen Betrieb vorgesehen sind, **dadurch gekennzeichnet, dass** das Getriebe als ein Kunststoffgetriebe mit einem Antriebsteil und/oder einem Abtriebsteil aus Kunststoff ausgebildet ist, wobei das Getriebe als ein Planetenradgetriebe (83) mit Planetenrädern (86), Sonnenrad (80) und Hohlrad (95) ausgebildet ist und die reibungsreduzierenden Mittel als nichtflüchtige, das heißt, als im Betrieb nicht verbraucht werdende oder nicht durch Staub oder Schmutz verpastende Mittel ausgebildet sind, wobei die nichtflüchtigen, reibungsreduzierenden Mittel als Beschichtung an dem Antriebsteil und/oder dem Abtriebsteil nach Art einer Gleitlackbeschichtung ausgebildet sind.

2. Getriebe nach Anspruch 1, **dadurch gekennzeichnet, dass** das Getriebe aus PA-66 ausgebildet ist.

3. Getriebe nach Anspruch 2, **dadurch gekennzeichnet, dass** das Hohlrad (95) die Gleitlackbeschichtung aufweist.

4. Getriebe nach Anspruch 2 oder 3, **dadurch gekennzeichnet, dass** das Hohlrad (95) eine sich über eine gesamte Innenfläche erstreckende Verzahnung aufweist, wobei die gesamte Innenfläche mit der Gleitlackbeschichtung ausgebildet ist.

5. Getriebe nach einem der Ansprüche 2 bis 4, **dadurch gekennzeichnet, dass** das Hohlrad (95) eine sich über eine gesamte Innenfläche erstreckende Verzahnung aufweist, wobei nur die Verzahnung mit der Gleitlackbeschichtung ausgebildet ist.

6. Starter (10) zum Andrehen einer Brennkraftmaschine, mit einem in einen Zahnkranz (25) des Verbrennungsmotors einspurenden Ritzel (22) mit dem dazwischen geschaltetem Getriebe nach einem der vorherigen Ansprüche 1 bis 5 .

7. System umfassend eine Brennkraftmaschine und einen Starter (10) zum Andrehen einer Brennkraftmaschine nach Anspruch 6, wobei der Starter (10) einen Startermotor (13) und das über Kopplungsmittel mit dem Startermotor (13) koppelbare Ritzel (22) zum Übertragen eines Drehmomentes auf den mit dem Ritzel (22) in Eingriff bringbaren Zahnkranz (25) der Brennkraftmaschine aufweist.

## Claims

1. Gear for reducing the rotational speed, while at the same time increasing the torque of a starter motor (13) for internal combustion engines, comprising a driving part and a driven part operatively connected tribologically to the driving part, friction-reducing means between driving part and driven part being provided for operation, **characterized in that** the gear is designed as a plastic gear with a driving part and/or a driven part made from plastic, the gear being designed as an epicyclic gear (83) with planet wheels (86), a sun wheel (80) and a ring wheel (95), and the friction-reducing means being designed as non-volatile means, that is to say means not being consumed during operation or not becoming pasty as a result of dust or dirt, the non-volatile friction-reducing means being designed as a coating on the driving part and/or the driven part in the manner of an anti-friction lacquer coating.

2. Gear according to Claim 1, **characterized in that** the gear is formed from PA-66.

3. Gear according to Claim 2, **characterized in that** the ring wheel (95) has the anti-friction lacquer coating.

4. Gear according to Claim 2 or 3, **characterized in that** the ring wheel (95) has a toothing extending over an entire inner face, the entire inner face being formed with the anti-friction lacquer coating.

5. Gear according to one of Claims 2 to 4, **characterized in that** the ring wheel (95) has a toothing extending over an entire inner face, only the toothing being formed with the anti-friction lacquer coating.

6. Starter (10) for starting an internal combustion engine, with a pinion (22) engaging into a toothed rim (25) of the internal combustion engine, with the gear according to one of the preceding Claims 1 to 5 inserted between them.

7. System comprising an internal combustion engine and a starter (10) for starting an internal combustion engine according to Claim 6, the starter (10) having a starter motor (13) and the pinion (22), couplable to the starter motor (13) via coupling means, for transmitting a torque to the toothed rim (25) of the internal combustion engine, the said toothed rim being engageable with the pinion (22).

## Revendications

1. Transmission pour la réduction du régime avec augmentation simultanée du couple d'un moteur de démarrage (13) pour des moteurs à combustion interne, comprenant une partie d'entraînement et une partie de prise de force en liaison fonctionnelle tribologique avec la partie d'entraînement, des moyens de réduction des frottements entre la partie d'entraînement et la partie de prise de force étant prévus pour un fonctionnement, **caractérisée en ce que** la transmission est réalisée sous forme de transmission en plastique avec une partie d'entraînement et/ou une partie de prise de force en plastique, la transmission étant réalisée sous forme de transmission à engrenages planétaires (83) avec des satellites (86), une roue solaire (80) et une couronne (95) et les moyens de réduction des frottements étant réalisés sous forme de moyens non volatils, c'est-à-dire n'étant pas consommés au fur et à mesure du fonctionnement ou ne s'empâtant pas avec de la poussière ou de la saleté, les moyens de réduction des frottements non volatils étant réalisés sous forme de revêtement au niveau de la partie d'entraînement et/ou de la partie de prise de force à la manière d'un revêtement de vernis lisse.

2. Transmission selon la revendication 1, **caractérisée en ce que** la transmission est constituée de PA-66.

3. Transmission selon la revendication 2, **caractérisée en ce que** la couronne (95) présente le revêtement de vernis lisse.

4. Transmission selon la revendication 2 ou 3, **caractérisée en ce que** la couronne (95) présente une denture s'étendant sur une surface intérieure complète, la surface intérieure complète étant réalisée avec le revêtement de vernis lisse.

5. Transmission selon l'une quelconque des revendications 2 à 4, **caractérisée en ce que** la couronne (95) présente une denture s'étendant sur une surface intérieure complète, seule la denture étant réalisée avec le revêtement de vernis lisse.

6. Démarreur (10) pour mettre en rotation un moteur à combustion interne, comprenant un pignon (22) s'engrenant dans une couronne dentée (25) du moteur à combustion interne avec interposition de la transmission selon l'une quelconque des revendications précédentes 1 à 5.

7. Système comprenant un moteur à combustion interne et un démarreur (10) pour mettre en rotation un moteur à combustion interne selon la revendication 6, dans lequel le démarreur (10) présente un moteur de démarreur (13) et le pignon (22) pouvant être accouplé au moteur de démarreur (13) par le biais de moyens d'accouplement pour le transfert d'un couple à la couronne dentée (25) du moteur à combustion interne pouvant être amenée en prise avec le pignon (22).
